Europäisches Patentamt

European Patent Office

Office européen des brevets

(19)

(11) Publication number: **0 076 041**
**B1**

(12) **EUROPEAN PATENT SPECIFICATION**

(45) Date of publication of patent specification: **19.03.86**

(51) Int. Cl.⁴: **B 60 N 1/08**

(21) Application number: **82304575.2**

(22) Date of filing: **31.08.82**

(54) **Vehicle seat slide mechanism.**

(30) Priority: **01.09.81 GB 8126491**
**03.06.82 GB 8216171**

(43) Date of publication of application:
**06.04.83 Bulletin 83/14**

(45) Publication of the grant of the patent:
**19.03.86 Bulletin 86/12**

(84) Designated Contracting States:
**DE FR GB IT SE**

(56) References cited:
**EP-A-0 037 726**
**DE-A-2 605 997**
**DE-U-7 718 568**
**GB-A-2 033 738**

(73) Proprietor: **TI COX LIMITED**
**177 Lenton Boulevard**
**Nottingham NG7 2DD (GB)**

(72) Inventor: **Babbs, Frederick William**
**"Greycourt" 10, Hartington Road**
**Sherwood Nottingham (GB)**

(74) Representative: **Arthur, George Fitzgerald et al**
**KILBURN & STRODE 30, John Street**
**London WC1N 2DD (GB)**

Courier Press, Leamington Spa, England.

## Description

This invention relates to vehicle seat slide mechanisms.

Vehicle seat slide mechanisms such as are provided for the fore-and-aft adjustment of the front seats of a motor car or the driving seat of other types of vehicle, comprise a first slide member arranged to be fixed on the floor of the vehicle of a second slide member attached to the body of the vehicle seat and slidably arranged in the first slide member. It is normal to provide two pairs of slide members, one pair on either side of the seat to make a vehicle seat slide assembly.

Rentorp's German Utility Model DE—U—7718568 describes a seat slide mechanism having a first slide member with a cross-section generally in the form of a U and a second slide member with a cross-section generally in the form of an inverted T, with rollers between the base of the U and the underside of the bar of the inverted T. The ends of the T bar bend back within turned-inwards parts of the U arms and U section spacers hold them apart. This has the disadvantage that there is continual contact between the U and T with frictional forces opposing sliding.

This invention has as an object to overcome the problem of frictional resistance due to sliding components of the two slide members.

The solution to this problem is given by the characterising portion of claim 1.

The present invention uses the idea that if there are respective parts of the sections of the two slides which are spaced from one another so that there is little resistance to sliding and there is some manufacturing tolerance, nevertheless, the respective parts can be close enough together to come into contact along a substantial part of the lengths of the slides under very high loads to prevent the slides separating and allowing the seat and passengers to be thrown against the body of the vehicle.

Such a closely spaced part of a slide section can be beyond a part defining a track for a ball or roller bearing.

Two lines of ball bearings can ensure that normally sliding is very free with no sliding, but only rolling at bearings.

It can be arranged that the sections have to be deformed slightly to accommodate the balls so that the sections are then pre-stressed and the pair will not rattle.

Balls can have thrust lines at an angle to the horizontal and vertical so that both transverse and vertical loads between the slides of a pair can be carried by the balls.

According to another aspect there may be notches on one slide and a latch for locking the slides in one of a number of positions of longitudinal adjustment. A trigger for releasing the latch comprises a pair of wires or rods arranged to extend transversely to the slides with one wire in a hole in one slide member constituting a pivot, and the other wire in a slot in that slide member constituting a guide, and a release member and a body adapted to be mounted on the wires respectively on opposite sides of the slide pair.

That arrangement has several advantages. For example, the two slide pairs and the components of the trigger can be supplied to a manufacturer in knock-down form, so that the package of components is compact, and assembly is quite easy by passing the wires through the hole and slot and mounting the release member and the body on them.

Conveniently, the wires are swaged into the body or the release member, so that after they have been passed through the hole and the slot, the other only has to be press-fitted onto the exposed ends of the wires to hold the components assembled.

The body may in fact constitute a cross tube extending transversely between corresponding triggers on the two pairs of slide members one at each side of the seat.

The release member could be an injection moulding made in accordance with a particular customer's requirements.

The latch which can be supplied assembled with a pair of slide members will have a part which can be lifted for example against a spring by the wire in the slot as the other wire turns in the pivot hole. Possibly, the latch will be formed with a curved portion to accommodate the wires or one of them.

The spring will act to cause the latch to re-engage notches in any position of the slides when the release member is released.

The invention may be carried into practice in various ways, and reference will be made to the accompanying drawings of various embodiments of the present invention. In the accompanying drawings:

FIGURE 1 is a side elevation of a seat slide assembly,

FIGURE 2 is a cross-sectional view of the slide assembly of FIGURE 1;

FIGURE 3 is a side elevation of a second seat slide assembly;

FIGURE 4 is a plan view of FIGURE 3;

FIGURE 5 is a cross-section of the slide assembly of FIGURE 3;

FIGURE 6 is a side elevation corresponding to FIGURE 1, but showing an alternative method of operating a position lock trigger;

FIGURE 7 is a plan view of FIGURE 6; and

FIGURE 8 is an end view of FIGURE 6.

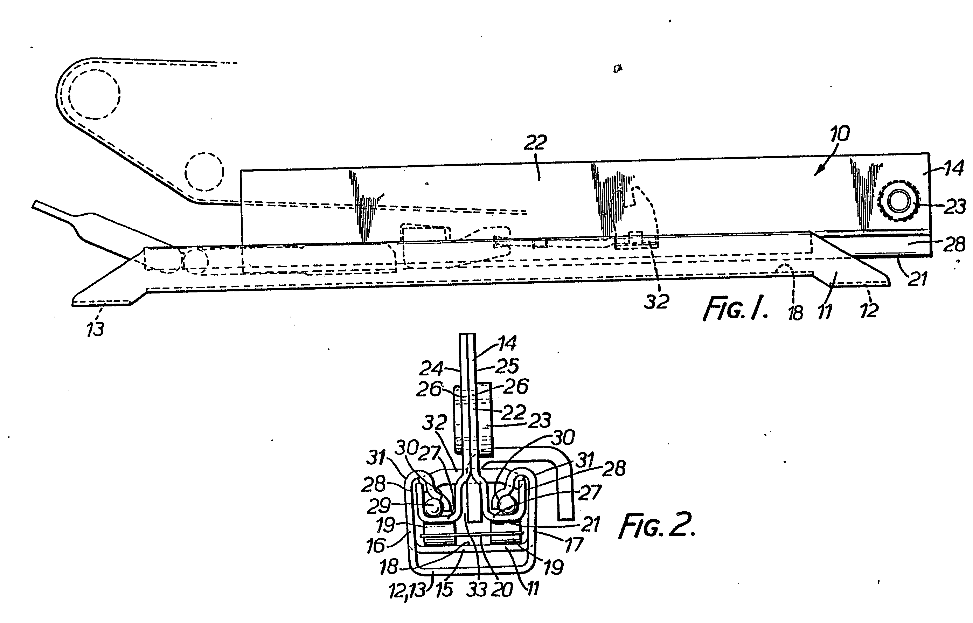

FIGURE 1 shows a side elevation of a slide member pair arranged to support one side of a vehicle seat from a vehicle floor. A second virtually identical pair would be used on the opposite side of the seat.

The slide assembly indicated generally at 10 comprises a first slide member 11 arranged to be fixed on the vehicle floor by means of mounting pads or formations 12 and 13, and a second slide member 14 slidably arranged in the slide member 11 and arranged to be attached to, and support, the body of a vertical seat.

The slide member 11 over the major portion of its length between the formations 12 and 13 is of generally U-shaped channel cross-section. The cross-section includes a flat horizontal portion 15, having upwardly extending arms 16 and 17, one on either side of the portion 15. The flat portion 15 provides an upwardly facing horizontal surface 18 forming a roller track for a series of rollers 19 in side-by-side pairs which are spaced along the track 15 by a cage 20. The second slide member 14 is of generally inverted 'T' shaped cross section and offers a downwardly facing horizontal surface 21 underneath the horizontal bar of the T. This surface forms a second roller track running on the rollers 19, thus supporting the weight of the seat on the first slide member and allowing free sliding movement between the slide members.  The slide member 14 is preferably formed from two folded and pressed sheet material components secured together to form a vertical bar of the T-cross-section as indicated at 22, thus offering a vertical flange for attachment to the seat body, and for attachment of such items as seat belt anchorages as shown for example as a boss 23. The sheet members indicated at 24 and 25 each have a vertical flange portion 26 and then extend outwards with portions 27 to define the horizontal surface 21 and upwards to define ears 28. A first ball track is formed at the arcuate portions between each of the portions 27 and ears 28 to receive ball bearings 29. The upper ends of the arms 16 and 17 of the first slide member are turned inwards and downwards at 31 over the ears 28 and are curved to terminate in arcuate portions 30 forming second ball tracks for the balls 29. Thus, the balls 29 provide a rolling bearing between the first and second slide members which resists transverse separation of the first and second slide members. The centres of the arcuate portions 27, 28 and 30 lie on axes at 45° to the horizontal and vertical in FIGURE 2 so that the balls 29 can carry some vertical load as well as transverse load between the slides and that enables the portions 30 and 28 to be designed to be sprung apart a little to accommodate the balls 29 during assembly.

The portions 27 are also sprung to admit the rollers 19.

For that reason the seat slide does not rattle when the seat is unoccupied.

The two slide members are only in contact through the balls and rollers during normal use so that sliding is easy. However, an abnormal load such as may be encountered in an accident when seat belt loads are transmitted to the second slide member can cause the ends of the ears 28 to come into contact with the turned over portions of the arms 16 and 17 along the whole length of the slide to resist local deformation at the balls.

In order to locate the first slide member relative to the second slide member at any chosen one of a number of adjustment positions, the turned over portions of the arms 16 and 17, as indicated at 31, and the ears 28, are formed with a series of correspondingly pitched notches, and a locking trigger, indicated at 32, in FIGURE 2, is arranged to engage any such notches which are brought into chosen alignment to lock the slide against fore and aft movement, in known manner per se. The portions 26 of the components 24 and 25 of the second slide member may be spaced apart at their lower edges as indicated at 33, to provide internal space for the operating mechanism for the trigger 32.

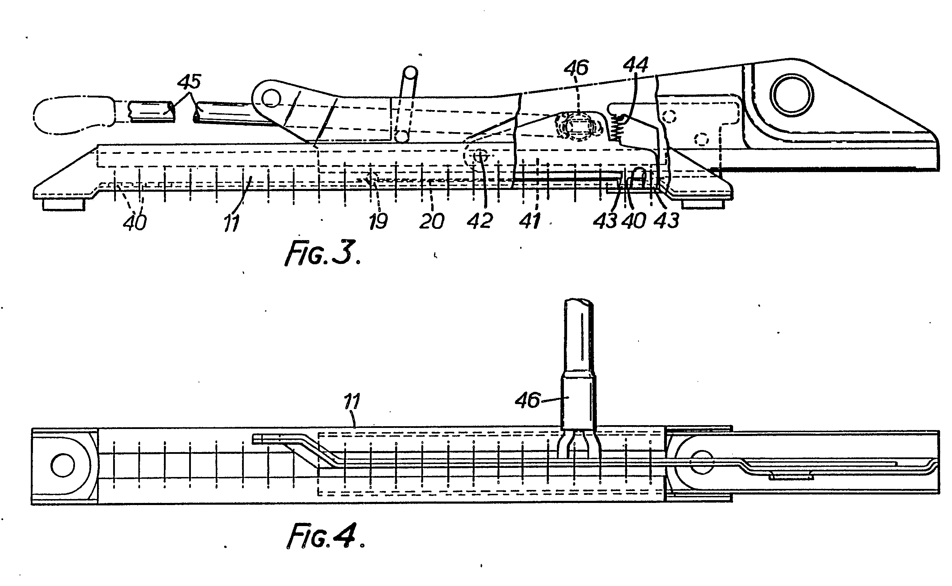

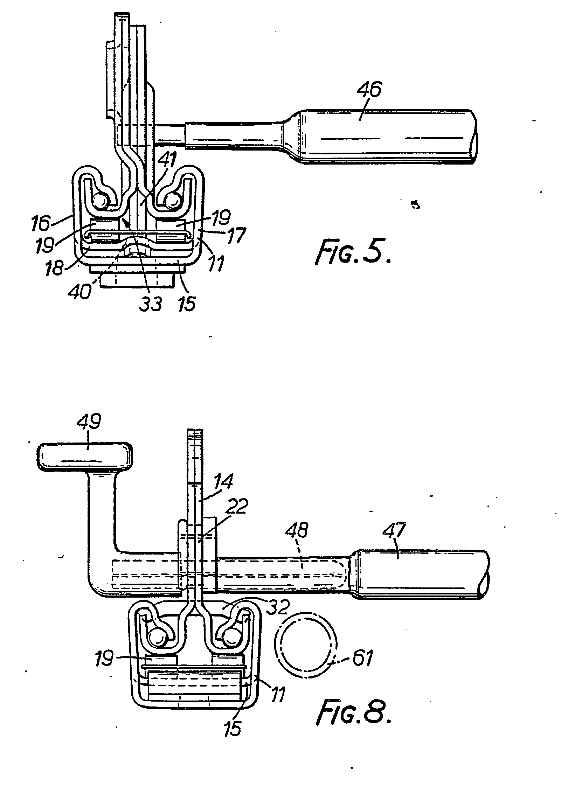

FIGURES 3, 4 and 5 show a generally similar arrangement to that discussed with respect to FIGURES 1 and 2, only with a modified locking trigger arrangement. Where parts are for the same or similar function and/or are of the same or similar construction they have been given the same reference number.

In this arrangement the horizontal portion 18 of the first slide member is provided with a longitudinal series of notches 40 arranged between the two lines of rollers 19. A locking trigger 41 is pivotally mounted on the second slide member in the space 33 about an axis indicated at 42 and has teeth 43 arranged to engage in any selected ones of the slots 40. The trigger 41 is biased into engagement with the slots 40 by means of a spring 44, and an operating handle 45 is provided to lift the trigger teeth clear of the slots 40 to allow fore-and-aft adjustment of the seat. A single handle 45 may be used for the triggers 41 provided on either side of the seat by means of a torque bar 46.

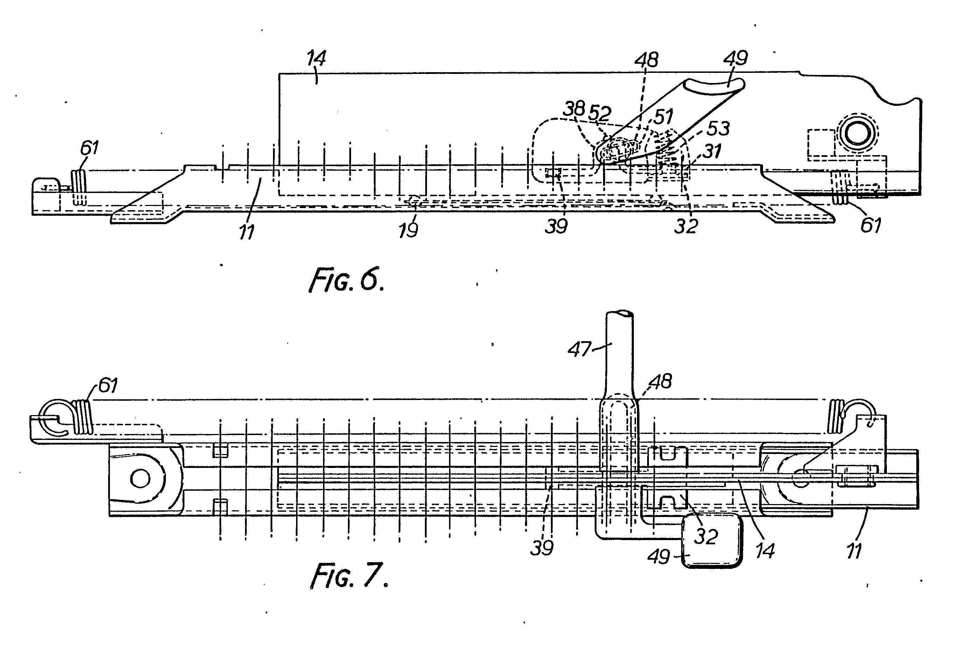

The arrangement in FIGURES 6, 7 and 8 uses the same slides as those shown in FIGURES 1 and 2, and the position lock trigger 32 is similar to that trigger except that it is pivoted at 39 in the sides of the second slide member 14 and has an inverted 'U' portion 38 by means of which it can be lifted out of engagement with the notches 31, (FIGURE 6).

Lifting of the trigger 32 is by means of a composite operating member comprising a control knob 49 in the form of an injection moulding, a cross tube 47, and a 'U' shaped wire 48 with the 'U' end swaged into the end of the cross tube 47.

The components are supplied in knock-down form with the slides, and in assembly the cross tube is first fitted to the second slide member 14 by pushing the ends of the wire 48 respectively into a pivot hole 51 and a guide slot 52 formed in the double walls 22 of the second slide member 14. The wire ends protrude through to the other side of the double member 22 and the control knob 49 can be press-fitted onto those ends, as shown best in FIGURE 8 to hold the components assembled. The corresponding part of the control knob is formed with two press fit holes for that purpose.

When the control knob is depressed the wires 48 pivot at 51 in a clockwise direction as seen in FIGURE 6, to lift the inverted 'U' 38 and so lift the trigger 32 out of engagement with the notches 31. The two slide members are then capable of relative fore-and-aft movement until when the control knob is released a compression spring 53 urges the trigger down again into engagement with the same notch 31 in the second slide member 14 and fresh notches in the first slide member 11 to hold the slide members locked together in a fresh fore-and-aft position.

A compression spring 61 acting between the front end of the slide member 11 and the rear end of the slide member 41, urges the slides into a normal fore-and-aft position.

## Claims

1. A vehicle seat slide pair comprising a first slide member (11) having a generally U-shaped channel cross-section with a base (15) and side arms (16, 17) and a second slide member (14) having a generally T-like cross-section defining a bar (27) which is opposed to the base of the U (15) and a vertical part which comprises a vertical attachment flange (22), the first and second slide members being assembled together for relative longitudinal movement on bearing means (19) in a race defined between the bar (27) of the second slide member and an opposed part (18) of the first slide member, the ends of the bar (27) of the second slide member being turned back to define at least one ear (28) and the arm(s) of U cross-section of the first slide member being turned inwards (at 31) around and closely spaced from the or each ear (28); characterised by two lines of ball bearings (29) interposed between the ends (28) of the bar on the one hand, and turned-inwards parts (30) of the U arms on the other hand, whereby the ball bearings (29) carry both vertical and transverse loads between the slides.

2. A slide pair as claimed in Claim 1 in which the second slide member has a bar (27) on either side of the flange (22) and the bearing means (19) comprise two lines of rollers one in a race defined between the base (15) of the U and one bar (27) of the T and the other in a race defined between the base (15) and the other bar (27) of the T.

3. A slide pair as claimed in Claim 1 or Claim 2 in which each line of ball bearings (29) is in a race defined between on the one hand, the angle of an ear (28) and a bar 27, and, on the other hand, the turned-inwards parts (30) of the U side arm beyond the ends of the ear.

4. A slide pair as claimed in any preceding claim in which the first slide member (11) has a series of notches for engagement with a trigger (32) on the other slide member (14) to hold the slide members located on one of a number of possible relative longitudinal positions, the notches being formed in the base (15) or the turned-over parts (31) of the first slide member (11).

5. A slide pair as claimed in Claim 4 in which mechanism for operating the trigger (32) is positioned in a space (33) defined by a gap between the bars (27) of the T.

6. A slide pair as claimed in Claim 4 or Claim 5 which includes an operating member for the trigger which comprises a pair of wires or rods (48) arranged to extend transversely to the slide members with one wire in a hole (51) in one slide member constituting a pivot, and the other wire in a slot (52) in that slide member.

7. A slide pair as claimed in Claim 6 in which the trigger (32) is assembled with the pair of slide members (11, 14) and has a part (38) which can be lifted, for example, against a spring (53), by one wire of the pair (48) in the slot (52) as the other wire turns in the pivot hole (51).

8. A slide pair as claimed in Claim 6 or Claim 7 in which the the lifting part of the trigger is formed with a curved portion (38) to accommodate the wires (48) or one of them.

9. Two slide pairs each as claimed in any of Claims 4 to 8 including a cross tube (46, 47) extending transversely between corresponding triggers (32) on the two pairs of slide members (11, 14), one at each side of the seat.

## Patentansprüche

1. Fahrzeugsitz-Verstellschienenpaar mit einem ersten Verstellschienenglied (11), das einen allgemein U-förmigen Querschnitt mit einer Basis (15) und Seitenarmen (16, 17) aufweist, und mit einem zweiten Verstellschienenglied (14) mit einem allgemein T-förmigen Querschnitt, der eine Schiene (27), die der Basis des U (15) gegenüberliegt, sowie ein vertikales Teil ausbildet, das einen vertikalen Befestigungsflansch (22) aufweist, wobei das erste und zweite Verstellschienenglied zusammengefügt sind für eine relative Längsbewegung auf Lagereinrichtungen (19) in einer Lagerbahn, die zwischen der Schiene (27) des zweiten Verstellschienengliedes und einem dieser gegenüberliegenden Teil (18) des ersten Verstellschienengliedes ausgebildet wird, wobei die Enden der Schiene (27) des zweiten Verstellschienengliedes nach rückwärts umgebogen sind, um zumindest einen Ansatz auszubilden, und wobei der bzw. die Arm(e) des U-Querschnitts des ersten Verstellschienengliedes um den bzw. jeden Ansatz (28) herum und nahe bei diesem bzw. jedem nach einwärts (bei 31) umgebogen ist bzw. sind, gekennzeichnet durch zwei Reihen von Kugellagern (29), die zwischen der Enden (28) der Schiene einerseits und nach innen gebogenen Teilen (30) der U-Arme andererseits zwischengeschaltet sind, wodurch die Kugellager (29) sowohl vertikale wie auch schräg verlaufende Belastungen zwischen den Verstellschienen tragen.

2. Verstellschienenpaar nach Anspruch 1, dadurch gekennzeichnet, daß das zweite Verstellschienenglied eine Schiene (27) auf jeder Seite des Flansches (22) aufweist, und daß die Lagereinrichtungen (19) zwei Reihen von Kugeln aufweisen, eine in einer Lagerbahn, die zwischen der Basis (15) des U und einer Schiene (27) des T ausgebildet ist, und die andere in einer Lagerbahn zwischen der Basis (15) und der anderen Schiene (27) des T.

3. Verstellschienenpaar nach Anspruch 1 oder 2, dadurch gekennzeichnet, daß jede Reihe von Kugellagern (29) in einer Lagerbahn angeordnet ist, die zwischen dem Winkel, der zwischen einem Ansatz (28) und einer Schiene (27) ausgebildet wird, einerseits sowie den nach innen über die Enden des Absatzes gebogenen Teilen (30) des Seitenarmes des U andererseits ausgebildet wird.

4. Verstellschienenpaar nach einem der vorausgegangenen Ansprüche, dadurch gekennzeichnet, daß das erste Verstellschienenglied (11) mit einer Reihe von Kerben zum Eingriff mit einem Sperrhebel (32) am anderen Verstellschienenglied (14) versehen ist, um die Verstellschienenglieder in einer Einstellposition aus einer Vielzahl möglicher Längsverstell-Positionen zu halten, wobei die Kerben in der Basis (15) oder in den umgebogenen Teilen (31) des ersten Verstellschienengliedes (11) ausgebildet sind.

5. Verstellschienenpaar nach Anspruch 4, dadurch gekennzeichnet, daß ein Betätigungsmechanismus für den Sperrhebel (32) in einem Raum (33) angeordnet ist, der von einem Spalt zwischen den Schienen (27) des T gebildet wird.

6. Verstellschienenpaar nach Anspruch 4 oder 5, dadurch gekennzeichnet, daß ein Betätigungsglied für den Sperrhebel vorgesehen ist, das ein Paar von Drähten oder Stäben (48) aufweist, die so angeordnet sind, daß sie sich quer zu den Verstellschienengliedern erstrecken, wobei ein Draht in einer Öffnung (51) in einem Verstellschienenglied verläuft und einen Drehpunkt bildet, während der andere Draht in einen Schlitz (52) in diesem Verstellschienenglied eingreift.

7. Verstellschienenpaar nach Anspruch 6, dadurch gekennzeichnet, daß der Sperrhebel (32) mit dem Paar der Verstellschienenglieder (11, 14) zusammengefügt ist und ein Teil (38) aufweist, das z.B. gegen eine Feder (53) angehoben werden kern, wobei sich ein Draht des Paares (48) in dem Schlitz (52) befindet, während der andere Draht sich dabei in der Drehöffnung (51) dreht.

8. Verstellschienenpaar nach Anspruch 6 oder 7, dadurch gekennzeichnet, daß der Anhebeteil des Sperrhebels mit einem gekrümmten Abschnitt (38) zur Aufnahme der Drähte (48) oder eines derselben versehen ist.

9. Doppel-Verstellschienenpaar, jedes derselben nach einem der Ansprüche 4 bis 8, dadurch gekennzeichnet, daß ein Querrohr (46, 47) vorgesehen ist, das sich quer zwischen entsprechenden Sperrhebeln (32) an beiden Paaren von Verstellschienengliedern (11, 14) erstreckt, von denen jeweils eines an beiden Seiten des Sitzes angebracht ist.

**Revendications**

1. Une paire de glissières pour siège de véhicule comprenant un premier élément de glissière (11) ayant une section droite dans l'ensemble en forme U comportant une base (15) et des branches latérales (16, 17), un second élément de glissière (14) ayant dans l'ensemble une section droite en forme de T définissant une barre (27) qui est opposée à la base du U (15) et une partie verticale qui comprend une aile verticale de fixation (22), le premier et le second éléments de glissière étant assemblés ensemble en vue d'un mouvement longitudinal relatif sur des organes d'appui (19) placés dans une voie définie entre la barre (27) de second élément de glissière et une partie opposée (18) du premier élément de glissière, les extrémités de la barre (27) du second élément de glissière étant recourbées en arrière pour définir au moins une oreille (28) et la ou les branches de la section droite en U premier élément de glissière étant recourbées vers l'intérieur (en 31) autour et en espacement étroit de la ou de chaque oreille (28); caractérisée par deux rangées de supports à billes (29; qui sont interposés entre les extrémités (28) de la barre d'une part, et des parties recourbées vers l'intérieur (30) des branches du U d'autre part, de manière que les supports à billes (29) absorbent à la fois des charges verticales et transversales entre les glissières.

2. Une paire de glissières telle que revendiquée à la revendication 1, dans laquelle le second élément de glissière comporte une barre (27) située sur un côté de l'aile (22) et les organes d'appui (19) comprennent deux lignes de rouleaux dont l'une est placée dans une voie définie entre la base (15) et une barre (27) du T tandis que l'autre est placée dans une voie définie entre la base (15) et l'autre barre (27) du T.

3. Une paire de glissières telle revendiquée à la revendication 1 ou la revendication 2, dans laquelle chaque ligne de supports à billes (29) est placée dans une voie définie entre d'une part l'angle d'une oreille (28) et une barre (27) et d'autre part, les parties recourbées vers l'intérieur (30) de la branche latérale du U au-delà des extrémités de l'oreille.

4. Une paire de glissières telle que revendiquée dans l'une quelconque des revendications précédentes, dans laquelle le premier élément de glissière (11) comporte une série de fentes destinées à recevoir un déclencheur (32) prévu sur l'autre élément de glissière (14) pour maintenir les éléments de glissière placés dans une d'un certain nombre de positions longitudinales relatives possibles, les fentes étant ménagées dans la base (15) ou les parties recourbées (31) du premier élément de glissière (11).

5. Une paire de glissières telle que revendiquée à la revendication 4, dans laquelle un mécanisme d'actionnement du déclencheur (32) est positionné dans un espace (33) défini par un intervalle entre les barres (27) du T.

6. Une paire de glissières telle que revendiquée dans la revendication 4 ou la revendication 5, qui comprend un élément d'actionnement du déclencheur qui comporte une paire de fils ou de tiges (48) disposés de manière à s'étendre transversalement aux éléments de glissière, un fil étant engagé dans un trou (51) ménagé dans un élément de glissière et formant un pivot tandis que l'autre fil est engagé dans une fente (52) prévue dans cet élément de glissière.

7. Une paire de glissières telle que revendiquée à la revendication 6, dans laquelle le déclencheur (32) est assemblé avec la paire d'éléments de glissière (11, 14) et comporte une partie (38) qui peut être soulevée, par exemple, en opposition à un ressort (53), par un fil de la paire (48) se

trouvant dans la fente (52) lorsque l'autre fil tourne dans le trou formant pivot (51).

8. Une paire de glissière telle que revendiquée dans la revendication 6 ou la revendication 7, dans laquelle la partie de soulèvement du déclencheur est pourvue d'une portion incurvée (38) pour recevoir les fils (48) ou l'un d'eux.

9. Deux paires de glissières chacune telle que revendiquée dans l'une quelconque des revendications 4 à 8, comprenant un tube transversal (46, 47) s'étandant transversalement entre des déclencheurs correspondants (32) placés sur les deux paires d'éléments de glissière (11, 14), un de chaque côté du siège.

*Fig. I.*

*Fig. 2.*

0 076 041

FIG. 3.

FIG. 4.

0 076 041

0 076 041

FIG.5.

FIG.8.

3

0 076 041

FIG. 6.

FIG. 7.

4